# EUROPEAN PATENT APPLICATION

(11) **EP 4 790 963 A1**
(43) Date of publication of application: **12.08.2026**
(21) Application number: 25382081.5
(22) Date of filing: 05.02.2025
(51) Int. Cl.: H04L 49/101, H04L 49/1515, H04L 49/15

(54) **SWITCH ARCHITECTURE**

(71) Applicant: IPronics Programmable Photonics S.L., 46010 València (ES)
(72) Inventor: The designation of the inventor has not yet been filed
(74) Representative: Barker Brettell LLP

(57) **Abstract**

A switch architecture comprises an input column array (110) comprising a plurality of input switching cells (110a-d), an output column array (160) comprising a plurality of output switching cells (160a-d), a plurality of further switching cells and a plurality of interconnecting channels directly connecting pairs of the plurality of further switching cells. The plurality of further switching cells are arranged in a plurality of columns (120-150), the plurality of columns (120-150) being positioned between the input column array (110) and the output column array (160) and including an input adjacent column (120) which is closest to the input column array (110), an output adjacent column (150) which is closest to the output column array (160), and a plurality of intermediate columns (130, 140), with the intermediate columns (130, 140) being positioned between the input adjacent column (120) and the output adjacent column (150). A first input switching cell (110a) is directly connected to a first switching cell (120a) of the input adjacent column (120), and a second input switching cell (110d) is directly connected to a first intermediate switching cell (140d) of one of the intermediate columns (140a-d). A first output switching cell (160d) is directly connected to a second switching cell (150d) of the output adjacent column (150), and a second output switching cell (160a) is directly connected to a second intermediate switching cell of one of the intermediate columns (130a).

## Description

### Field of the Invention

The present invention relates to a highly scalable, high radix switch architecture to be used in large-scale photonic processors for modern datacentre applications, computational clusters and artificial intelligence infrastructure.

### Background to the Invention

Artificial Intelligence (AI) innovation is facing a rapid and worldwide growth. The extensive deployment of AI technology across multiple industries is the main catalyst of an unprecedented increase in power consumption within datacentres. Such a sudden increase in power demand implies that datacentres will need to dramatically increase their efficiency and scalability. The traditional systems comprising only a few General Processing Units (GPUs) are no longer sufficient to process and compute the most recently programmed AI models, and the scalability limitations of these systems is significant.

In this context, there is an unprecedented demand for highly scalable, high-radix switch architectures, to be integrated within networking devices for connecting computing resources of multiple datacentres architectures.

At present, the limitations of networking switches for datacentres remain considerable. In particular, no solution has been presented for a high-radix high-capacity switch architecture whose performance and scalability can meet the new demands imposed by the extensive use of applications demanding big data movements.

The present invention sets out to alleviate these problems, and to provide an scalable high-radix switch architecture that is suitable for use in future datacentres, artificial intelligence infrastructure and high-performance computing.

### Summary of Invention

According to a first aspect of the present invention there is provided a switch architecture comprising: an input column array comprising a plurality of input switching cells, an output column array comprising a plurality of output switching cells, a plurality of further switching cells and a plurality of interconnecting channels directly connecting pairs of the plurality of further switching cells. The plurality of further switching cells may be arranged in a plurality of columns, wherein the plurality of columns are positioned between the input column array and the output column array. The plurality of columns may include an input adjacent column which is closest to the input column array and an output adjacent column which is closest to the output column array. The plurality of columns may comprise a plurality of intermediate columns, with the intermediate columns being positioned between the input adjacent column and the output adjacent column. A first input switching cell may be directly connected to a first switching cell of the input adjacent column. A second input switching cell may be directly connected to a first intermediate switching cell of one of the intermediate columns. A first output switching cell may be directly connected to a second switching cells of the output adjacent column. A second output switching cell may be directly connected to a second intermediate switching cell of one of the intermediate columns.

**In** some examples, each of the first input switching cell and the second input switching cell may be selectively coupled to any of the output switching cells via one or more of the interconnecting channels. **In** some examples, each of the first output switching cell and the second output switching cell may be selectively coupled to any of the input switching cells via one or more of the interconnecting channels.

The switch architecture may be used within networking systems, i.e., to provide a link between a plurality of servers or nodes. For example, the switch architecture may be used within an apparatus for intra-data connections, i.e., to route a plurality of signals (for instance, data streams modulated through optical signals) between different elements within a datacentre, such as servers, racks, GPUs or other nodes of the datacentre, respectively connected to any of the at least first and second input switching cell, and any of the at least first and second output switching cell. This may be provided by each of the at least first/second input switching cell being selectively coupled to any of the output switching cells via one or more of the interconnecting channels. This may be further provided by having each of the at least first/second output switching cell selectively coupled to any of the input switching cells via one or more of the interconnecting channels.

Due to the particular arrangement of the switching cells and the interconnecting channels within the switch architecture, the claimed invention provides a layout design that can be applied to large-scale, high radix switching architectures. Advantageously, the invention provides a high radix switching architecture within a high density and low-loss device. In this context, the radix of a switching architecture is defined as the number of input/output ports of the switch architecture. A high radix switching architecture is therefore desirable, to switch signals from/to a high number of ports. However, in order to obtain a scalable and high radix switching architecture, the architecture needs to be designed with a high density layout, to make sure that a high number of switching cells can be built within a relatively small space.

More specifically, high density integration is achieved through the arrangement of the plurality of further switching cells in intermediate columns and input/output adjacent columns, positioned between the input column array and the output column array, together with the way various switching cells in different columns are connected with each other.

In particular, high density integration is provided by having a plurality of further switching cells organised in a plurality of columns placed between the input column array and the output column array, with an input adjacent column being the closest column to the input column array and an output adjacent column being the closest to the output column array, and finally, with a number of intermediate columns between the input and output adjacent columns, and by having at least a first input switching cell and at least a second input switching cell of the input column array directly connected, respectively, to a first switching cell of an input adjacent column (which is the closest column to the input column array), and to a first intermediate switching cell of one of a number of intermediate columns. This particular arrangement of the switching cells is mirrored for the output switching cells of the output column array, by having at least a first output switching cell and a second output switching cell being directly connected to, respectively, a second switching cell of the output adjacent column (which is the closest column to the output column array), and a second intermediate switching cell of one of the intermediate columns. However, it is noted that the layout of the connecting channels connecting input switching cells with further switching cells may be different from the layout of the connecting channels connecting output switching cells with further switching cells. For example, the number of crossings between connecting channels connecting input switching cells with respective further switching cells may be different from the number of channels connecting output switching cells with respective further switching cells.

In this way, the selective coupling between a first/second input (output) switching cell and the respective output (input) switching cell is provided in a compact layout, which is easier to fabricate and to integrate with other components of, for example, a switching network apparatus.

In some arrangements, each input switching cell has a first output port directly connected to a switching cell of the input adjacent column, and a second output port directly connected to a respective intermediate switching cell of one of the intermediate columns. In some arrangements, each output switching cell has a first input port directly connected to a switching cell of the output adjacent column, and a second input port directly connected to a respective intermediate switching cell of one of the intermediate columns.

In this way, every input switching cell and/or every output switching cell is connected, through a port, directly to one of the switching cells arranged in the columns placed between the input and output column arrays.

In some arrangements, the further switching cells include an input layer of switching cells, wherein the input layer comprises all the switching cells which are directly connected to any of the input switching cells. In some examples, the further switching cells further include an output layer comprising all the switching cells which are directly connected to any of the output switching cells. In some examples, the input layer may include switching cells from at least two of the intermediate columns. In some examples, the output layer may include switching cells from at least two of the intermediate columns.

In prior art systems each layer of cells is typically arranged in a single column. Consequently, the further plurality of columns between the input and output column array are, in the prior art systems, much longer, or at least have more cells, than the input and output column arrays. This leads to a wider gap between switching cells within the input and output columns or gaps at the ends of the input and output columns, which increases the footprint of the device, reducing scalability. Some embodiments of the present invention allow all or most of the switching cells to be arranged in a rectangular array of switching cells, so that the spacing between most of them is no more than is necessary to avoid crosstalk or excessive losses and reducing the aspect ratio of the overall system footprint (i.e. the difference between the vertical and horizontal dimensions of the layout.

In some arrangements, the plurality of further switching cells are arranged in a plurality of sub-units, wherein each sub-unit comprises a NxN switching network, with each NxN switching network being a network of switching cells and comprising N input ports and N output ports, with each input port of each sub-unit being selectively connectable to any output port of the sub-unit through the network of switching cells.

In this way, one or more of the input switching cells of the input column array can be selectively connectable to one or more output switching cells of the output column array via one or more of the sub-units. This can be achieved, for example, by connecting an input switching cell directly to one of the N input ports of a particular switching network of a particular sub-unit, whilst one or more of the N output ports of the same switching network is (are) connected to one or more output switching cells of the output column array. In this way, the input switching cell, being connected to one of the N ports of the switching network, can be selectively connectable to any of the one or more of the N output ports of the switch architecture, via the sub-unit, and thus, be selectively connectable to any of the one of more output switching cells connected to the one or more N output ports of the switch architecture.

In some arrangements, a second output port of an input switching cell of the input column array may be directly connected to the respective intermediate switching cell through a first connecting channel, wherein the first connecting channel does not intersect any of the plurality of sub-units. The first connecting channel may be part of the interconnecting channels.

In some arrangements, a second input port of an output switching cell of the output column array may be directly connected to the respective intermediate switching cell through a second connecting channel, wherein the second connecting channel does not intersect any of the plurality of sub-units. The second connecting channel may be is part of the interconnecting channels.

In this way, the channels connecting the respective input/output switching cell with the corresponding intermediate cell do not cross nor overlap with any of the switching networks of the plurality of sub-units. For example, if the switch architecture is an optical switch architecture, and the connecting channels are waveguides, by not intersecting any of the sub-units, the waveguides will not intersect any of the waveguides which connect the various switching cells of the NxN switching networks of the sub-units. In this way, cross-talk between the connecting channels and the switching networks is minimal or even zero.

In some arrangements, the switching cell of the input adjacent column and the switching cell of the respective intermediate column belong to two different sub-units. In some arrangements, the output switching cell of the output adjacent column and the switching cell of the respective intermediate column belong to two different sub-units.

In this way, an input switching cell can be directly connected to two switching cells (i.e., the switching cell of the input adjacent column and the switching cell of the respective intermediate column) that are located in different sub-units.

In some arrangements, the plurality of sub-units may be divided into a first group of sub-units and a second group of sub-units, wherein the first group is arranged in a column adjacent to the input column array and the second group is arranged in a column adjacent to the output column array. In this way, the switching networks within the respective sub-units may be arranged within a squared layout or a rectangular layout with a ratio between width and height which is closer to one with respect to the corresponding ratio for a layout where all the sub-units are arranged in a single column. Advantageously, this kind of shape for the layout of the switch architecture is easy to fabricate and integrate with other devices.

In some arrangements, the input switching cell of the input adjacent column belongs to a first sub-unit of the first group, and the respective intermediate switching cell of the intermediate column belongs to a second sub-unit of the second group. In this example, the first connecting channel may extend around the first sub-unit without intersecting the first sub-unit. For example, the first connecting channel may be designed to run along one side of the first sub-unit.

In some arrangements, the output switching cell of the output adjacent column belongs to a third sub-unit of the second group, and the respective intermediate switching cell of the intermediate column belongs to a fourth sub-unit of the first group. In this example, the second connecting channel may extend around the fourth sub-unit without intersecting the fourth sub-unit. For example, the second connecting channel may be designed to run along one side of the first sub-unit.

In some arrangements, each input switching cell is selectively connectable to any output switching cell and any output switching cell is selectively connectable to any input switching cell through one or more of the intermediate switching cells.

In some arrangements, the switch architecture is non-blocking, such that any of the plurality of input switching cells is selectively connectable to any output switching cell, with the smallest possible number of switching cells and interconnecting channels. Consequently, the number of unused interconnecting channels and switching cells is minimised. In this context, "unused" means not used to connect an input switching cell to a corresponding output switching cell, at a certain point in time.

In some arrangements, the switch architecture is bidirectional. In this way, signals (such as optical signals, in case of an optical switch architecture) can be propagated from an input switching cell to a particular output switching cell and vice versa, along the same path within the switch architecture.

In some arrangements, each of the plurality of sub-units comprises one of a Dilated Banyan switching network, a Switch and Select switching network, a Double layer switching network, a Benes switching network or a Dilated Benes switching network. The sub-units preferably comprise switching networks of the same type (for example, each sub-unit being a Dilated Banyan switching network). The type of switching architecture chosen for the sub-units depends on which properties are preferable.

In some arrangements, the switch architecture is an optical switch architecture, such that each of the switching cells comprises an optical switch and each connecting channel between switching cells comprises a waveguide.

### Brief Description of the Drawings

**Figure 1** is a schematic diagram of a switch architecture according to an embodiment of the invention;
**Figure 2** is a schematic diagram of the switch architecture illustrated in Figure 1;
**Figure 3** is a schematic diagram of a switch architecture according to an embodiment of the invention;
**Figure 4** is a schematic diagram of a switch architecture according to an embodiment of the invention;
**Figure 5** is a schematic diagram of various types of optical switches, which form part of a switch architecture according to embodiments of the invention;
**Figure 6** is a schematic diagram of a switch architecture according to an embodiment of the invention;
**Figure 7** is a schematic diagram of a switch architecture comprising nested switching architectures with lower radix, according to an embodiment of the invention; and
**Figure 8** is a schematic diagram of a switch architecture according to an embodiment of the invention.

### Description of Preferred Embodiments

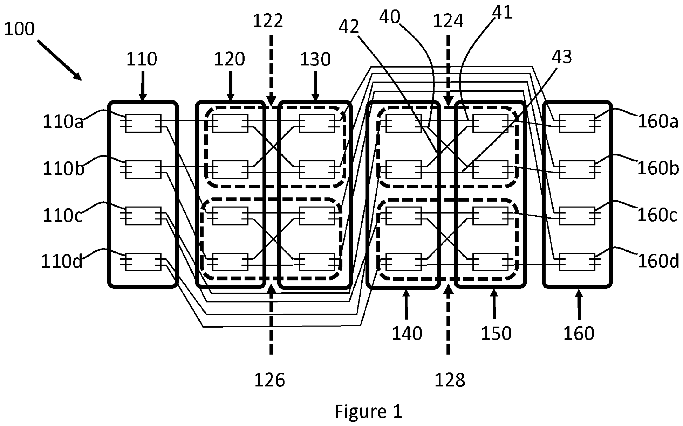

Referring to Figure 1, a switch architecture 100 comprises an input column array 110 of four input switching cells 110a-d, an output column array 160 of four output switching cells 160a-d, and a plurality of further switching cells arranged in a plurality of columns 120, 130, 140 and 150. The switch architecture 100 further comprises a plurality of interconnecting channels (such as 40, 41, 42 and 43) directly connecting pairs of the plurality of further switching cells. For simplicity of illustration, in Figure 1, only the four interconnections 40 to 43 have been labelled. The plurality of columns are all positioned between the input column array 110 and the output column array 160.

More specifically, the plurality of columns includes an input adjacent column 120, which is closest to the input column array 110 (i.e., immediately adjacent to the input column array), an output adjacent column 150, which is closest to the output column array 160 (i.e., immediately adjacent to the output column array), and two intermediate columns 130 and 140, disposed between the input adjacent column 120 and the output adjacent column 150. Each column comprises a number of switching cells. More specifically, the intermediate columns 130 and 140 respectively comprise a plurality of intermediate switching cells 130a-d and 140a-d, the input adjacent column comprises four (input adjacent) switching cells 120a-d and the output adjacent column comprises four (output adjacent) switching cells 150a-d. In this example, each column comprises four switching cells, but other numbers of switching cells and intermediate columns are equally possible.

Each of the input switching cells 110a-d is selectively coupled to one of the output switching cells 160a-d, via one or more of the interconnecting channels of the switch architecture 100. Each of the output switching cells 160a-d is selectively coupled to one of the input switching cells 110a-d, via one or more of the interconnecting channels of the switch architecture 100.

The switch architecture 100 has a Dilated Banyan architecture, whose structure is described herein.

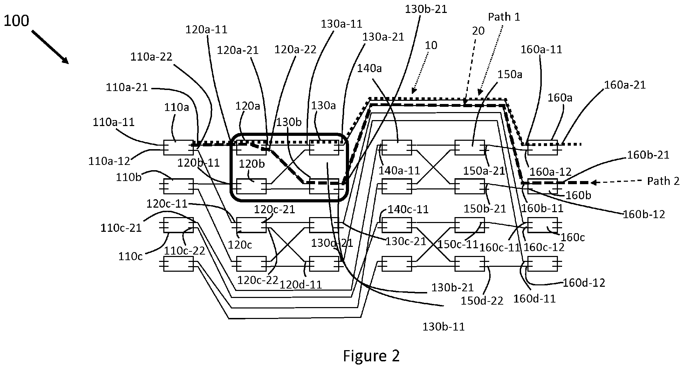

Each switching cell of the switch architecture 100 can be in one of two switching states: a parallel and a crossed switching state. The functional effect of parallel and crossed switching state depends on which port of the switching cell is idle. For example, with reference to Figure 2, switching cell 120a has an idle input port but both output ports are used. When a switching cell like switching cell 120a is in a parallel switching state, the used (or "first", in this case) input port (e.g., 120a-11) of the switching cell is connected to the first output port (120a-21) of the switching cell 120a. The second input port of the switching cell is idle (i.e., not connected to anything, and therefore not used). When the switching cell 120a is in a crossed switching state, the first input port 120a-11 of the switching cell 120a is connected to the second output port 120a-22 of the switching cell 120a. The second input port of the switching cell remains idle. Similarly, a switching cell such as 150a has an idle output port, but both input ports are in use. In this case, a parallel state of the switching cell 150a is provided when the first input port is connected to the first (and not idle) output port. A crossed state of the switching cell 150a is provided when the second input port is connected to the first (and not idle) output port.

Each switching cell is switchable between the parallel and the crossed state and vice versa. When one of the input ports is idle, the switching cell operates as, and may be defined as, a 1x2 switching cell. When one of the output ports is idle, the switching cell operates as, and may be defined as, a 2x1 switching cell. In each case these could be replaced by other forms of 1x2 or 2x1 switching cells.

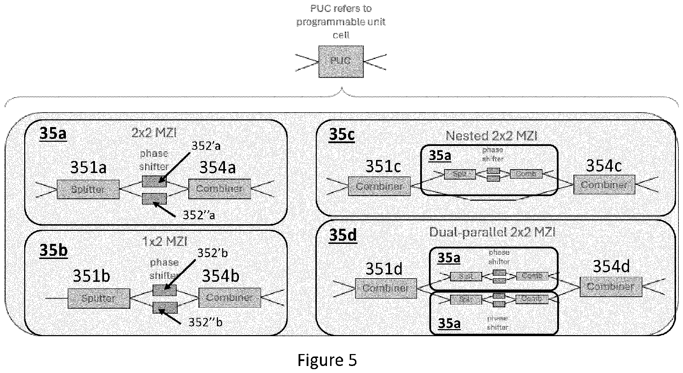

For example, if the switch architecture is optical, the switching cells may be programmable unit cells (PUCs) with optical switches as the ones illustrated in Figure 5. In this case, each PUC may controlled by an external Electrical Circuit to switch the corresponding optical switch from one state to another. In some examples, one of the input ports and/or one of the output ports of a particular switching cell may not be used (i.e., may not be connected to any other port). For example, with reference to Figure 2 (illustrating the same switch architecture 100 of Figure 1), input switching cell 110a has two input ports 110a-11 and 110a-12, and two output ports 110a-21 and 110a-22. When the input switching cell 110a is in a parallel state, the input port 110a-11 is directly connected to output port 110a-21, and input port 110a-12 is connected to output port 110a-22. In the crossed state, the input port 110a-11 is connected to output port 110a-22 and input port 110a-12 is connected to output port 110a-21. In this example, input port 110a-12 is not used (i.e., it is not connected to any other port, and does therefore not receive nor transmits any signal). What has been described for switching cell 110a in detail equally applies to any other switching cell of the switch architecture 100.

With reference to Figures 1 and 2, input switching cell 110a has the first output port 110a-21 directly connected to the first input port 120a-11 of switching cell 120a of the input adjacent column 120, and the second output port 110a-22 directly connected to a first input port 120c-11 of a respective intermediate switching cell 120c. Input switching cell 110b has a first output port 120c-21 directly connected to the first input port 120b-11 of switching cell 120b, and a second output port 120c-22 directly connected to a first input port 120d-11 of intermediate switching cell 120d. The two other input switching cells 110c-d are directly connected to respective intermediate switching cells of intermediate column 140, similarly to what described in detail for the switching cells above. More specifically, input switching cell 110c has a first output port 110c-21 which is directly connected to a first input port 140a-11 of intermediate switching cell 140a, and a second output port 110c-22 which is connected to the first input port 140c-11 of intermediate switching cell 140c.

Output switching cell 160a has a first input port 160a-11 directly connected to first output port 130a-21 of intermediate switching cell 130a and a second input port 160a-12 directly connected to the first output port 150a-21 of switching cell 150a. Output switching cell 160b has a first input port 160b-11 directly connected to first output port 130b-21 of intermediate switching cell 130b, and a second input port 160b-12 directly connected to a first output port 150b-21 of switching cell 150b. Output switching cell 160c has a first input port 160c-11 directly connected to a first output port 130c-21 of switching cell 130c and a second output port 160c-21 directly connected to first output port 150c-11 of switching cell 150c. Finally, output switching cell 160d has a first input port 160d-11 directly connected to a first output port 130d-21 of switching cell 130d and a second input port 160d-12 connected to second output port 150d-22 of switching cell 150d.

With reference to Figures 1 and 2, the switching cells arranged in the columns 120 to 150 are also arranged within four sub-units 122, 124, 126 and 128. In this case, each sub-unit comprises a 2x2 switching network. Each switching network comprises two input switching cells and two output switching cells. Each of the input/output switching cells comprises two input ports and two output ports. One of the two input ports for the input switching cells of each sub-unit is idle, as will be described later on in more detail. One of the two output ports for the output switching cells of each sub-unit is idle, as will be described later on in more detail. Thus, in this case, each sub-unit has four input ports and four output ports. Two of the four input/output ports are idle, as will be described later on in more detail. For example, as shown in Figure 2, sub-unit 122 has two input switching cells 120a and 120b, and two output switching cells 130a and 130b. In sub-unit 122, only two input ports (120a-11 and 120b-11) of the four input ports are used, i.e., are connected to another output port of another switching cell. The same applies to the output ports: only two output ports (130a-21 and 130b-21) are used, i.e., are connected to another input port of another switching cell. Each of the two input ports (120a-11 and 120b-11) of the input switching cells 120a and 120b of the sub-unit 122 is selectively connectable to any of the two output ports (130a-21 and 130b-21) of the output switching cells 130a and 130b of the sub-unit 122. A similar description applies to all the other sub-units 124, 126 and 128. In this example, each switching network is a 2x2 Dilated Banyan, but other network architectures may be possible. As for the case of the individual switching cells, each sub-unit 122 to 128 can be in one of two states: a parallel sub-unit state and a crossed sub-unit state. For example, when sub-unit 122 is in the parallel sub-unit state, input switching cell 120a is connected to output switching cell 130a, and input switching cell 120b is connected to output switching cell 130b. However, when in the crossed sub-unit state, the input switching cell 120a is connected to output switching cell 130b, and input switching cell 120b is connected to output switching cell 130a. Each sub-unit can be switchable from the parallel to the crossed sub-unit state and vice versa. In this way, the switch architecture 100 has multiple switching states. In each of these switching states, each of the input switching cells 110a-d is connected to a respective one of the output switching cells 160a-d, through a specific combination of sub-units being in particular sub-unit states (either crossed, parallel, or a mix of the two), and with each of the individual switching cells being in one of the parallel and crossed state. In other words, the particular switching state of the switch architecture 100 is determined by the specific states of each switching cell and of each sub-unit.

An advantage of providing multiple switching states through sub-units as sub-units 122 to 128, arranged as 2x2 Dilated Banyans, rather than using 2x2 cells with all ports used and none idle, is a significant reduction of first order crosstalk. First order crosstalk occurs between signals that are simultaneously inputted in two ports of the same switching cell, and has the effect of power leakage from one port to the other. By having one of the input/output ports of the switching cells idle, first order crosstalk is reduced, and consequently, undesired mixing of two signals inputted in two different ports is also reduced.

In this example, illustrated in Figures 1 and 2, the four sub-units 122 to 128 are divided into a first group and a second group. Sub-units 122 and 126 belong to the first group, whilst sub-units 124 and 128 belong to the second group. The first group, with sub-units 122 and 126, is arranged in a column adjacent to the input column array 110, and the second group, with sub-units 124 and 128, is arranged in a column adjacent to the output column array 160. In this particular example, each input switching cell 110a-d is adjacent to a switching cell of one of the sub-units 122 and 126. Each output switching cell 160a-d is adjacent to a switching cell of one of the sub-units 124 and 128. For example, sub-unit 122 comprises switching cells 120a, 120b, 130a, 130b. Input switching cell 110a is adjacent to switching cell 120a, and input switching cell 110b is adjacent to switching cell 120b. A similar description applies to all the other input/output switching cells 110c-d and 160a-d.

With reference to Figure 2, an example of how the switch architecture 100 works to selectively connect an input switching cell 110a with either output switching cell 160a or output switching cell 160b is illustrated. A signal 101 received at the first input port 110a-11 of input switching cell 110a, can be routed to either output port 160a-21 of output switching cell 160a through path 1, or to output port 160b-21 of output switching cell 160b through path 2. The signal 101 may be an optical signal, if the switch architecture 100 is an optical switch architecture.

Both paths 1 and 2 are formed by a specific combination of states for various switching cells and sub-units involved.

Path 1 is shown in Figure 2 in dotted lines. Path 1 comprises multiple interconnecting channels, directly connecting pairs of switching cells. For example, one interconnecting channel is a channel directly connecting the first output port 110a-21 of input switching cell 110a to the first input port 120a-11 of switching cell 120a. In path 1, input switching cell 110a is in a parallel state, because the first input port 110a-11 is connected to the first output port 110a-21. In path 1, the first output port 110a-21 of input switching cell 110a is directly connected to the input port 120a-11 of switching cell 120a of the sub-unit 122. Switching cell 120a is also part of the input adjacent column 120. In this configuration, switching cell 120a is in a parallel state, because the input port 120a-11 is connected to the first output port 120a-21. The first output port 120a-21 of the switching cell 120a is directly connected to the first input port 130a-11 of switching cell 130a. Switching cell 130a is in a parallel state, because the first input port 130a-11 is directly connected to the output port 130a-21. Switching cell 130a is one of the intermediate switching cells of intermediate column 130. The output port of intermediate switching cell 130a is directly connected to the first input port 160a-11 of output switching cell 160a through a first connecting channel 10. The first connecting channel 10 does not intersect any of the sub-units 122 to 128. The first connecting channel 10 does not intersect any component of the switch architecture 100. The first connecting channel 10 is designed to extend around the sub-unit 124, along one side of sub-unit 124. Switching cell 160a is in a parallel state because the first input port 160a-11 is connected to the first output port 160a-21.

Through path 1, signal 101 is propagated from the first input port 110a-11 of the input switching cell 110a to the first output port 160a-21 of output switching cell 160a. Path 1 is obtained by programming each of the switching cells involved in forming this connection (which are: 120a and 130a) to be in a parallel state. Equally, sub-unit 122 is programmed to be in the parallel sub-unit state, because the first input switching cell 120a of the sub-unit 122 is connected with the first output switching cell 130a of the sub-unit 122.

Path 2 is shown in Figure 2 in dashed lines, and is an alternative path to path 1, obtained through programming switching cells to be in different states, as will be described in detail below. In path 2, the input switching cell 110a is in a parallel state, as for path 1. The first output port 110a-21 of input switching cell 110a is directly connected to the input port 120a-21 of switching cell 120a of the sub-unit 122. Switching cell 120a is also part of the input adjacent column 120. In this configuration, switching cell 120a is in a crossed state, because the input port 120a-21 of switching cell 120a is connected to the second output port 120a-22 of the switching cell 120a. The second output port 120a-22 of the switching cell 120a is directly connected to the first input port 130b-11 of switching cell 130b. The switching cell 130b is in a parallel state, because the first input port 130b-11 of switching cell 130b is connected to the first output port 130b-21 of switching cell 130b. Switching cell 130b is one of the intermediate switching cells of intermediate column 130. The first output port 130b-21 of intermediate switching cell 130b is directly connected to the first input port 160b-11 of output switching cell 160b through a second connecting channel 20. The second connecting channel 20 does not intersect any of the sub-units 122 to 128. The second connecting channel 20 does not intersect any component of the switch architecture 100. The second connecting channel 20 is designed to extend around the sub-unit 124, along one side of sub-unit 124. The second connecting channel 20 runs parallel to the first connecting channel 10, for a length that extends along the side of the sub-unit 124. The output switching cell 160b is in a parallel state, because the first input port 160b-11 of output switching cell 160b is connected to the first output port 160b-21 of the output switching cell 160b.

Through path 2, signal 101 is propagated from the first input port 110a-11 of input switching cell 110a to the first output port 160-21 of output switching cell 160b. Path 2 is obtained by programming each of the switching cells involved in forming this connection (which are: 120a and 130b) to be in a specific state. In particular, differently from path 1, switching cell 120a is programmed to be the crossed state rather than in the parallel state. Equally, sub-unit 122 is programmed to be in the crossed sub-unit state, because the first input switching cell 120a of the sub-unit 122 is connected with the second output switching cell 130b of the sub-unit 122.

The switch architecture 100 is bidirectional, because each signal can be propagated in opposite directions through the respective path. For instance, signal 101 can be propagated from first input port 110a-11 of input switching cell 110a to first output port 160a-21 of output switching cell 160a along path 1, but can also be propagated from the first output port 160a-21 of output switching cell 160a to first input port 110a-11 of input switching cell 110a along path 1 (in which case, the input ports function as output ports and output ports function as input ports). The same applies for any other path, including paths 2, and any other path which is not illustrated in detail in Figure 2.

Although in Figure 2 only two possible paths are highlighted and described in detail, a number of alternative paths can selectively connect different input switching cells 110a-d with any of the output switching cells 160a-d. The particular path is determined by the configuration of each switching cell involved, and can be changed by changing the configuration of one or more of said switching cells involved in forming the path, as described in the examples above.

In the example of Figures 1 and 2, each of the output ports of input switching cells 110c and 110d is directly connected to one of the intermediate switching cells, in this case, belonging to intermediate switching column 140. Each connection is through a connecting channel which does not overlap (intersect) with any other switching cell of either the input adjacent column 120 or the intermediate column 130. The various connecting channels all run along one side of sub-unit 126, without overlapping nor intersecting said sub-unit 126. Some of the connecting channels intersect with each other. The number of intersecting points between different connecting channels is minimal, to minimise cross-talk between the connecting channels.

The switching cells of the switch architecture 100 include an input layer of switching cells, and an output layer of switching cells.

The input layer comprises all the switching cells which are directly connected to any of the input switching cells 110a-d. The input layer comprises all the input switching cells of all the sub-units of the switch architecture 100. More specifically, the input layer comprises input adjacent switching cells 120a-d of the input adjacent column 120, of which 120a-b belong to sub-unit 122 and 120c-d belong to sub-unit 126 (with reference to Figures 1 and 2). The input layer further comprises intermediate switching cells 140a-d of intermediate column 140, of which 140a-b belong to sub-unit 124, and 140c-d belong to sub-unit 128.

The output layer comprises all the switching cells which are directly connected to any of the output switching cells 160a-d. The output layer comprises all the output switching cells of all the sub-units forming the switch architecture 100. More specifically, the output layer comprises output adjacent switching cells 150a-d of the output adjacent column 150, of which 150a-b belong to sub-unit 124 and 150c-d belong to sub-unit 128 (with reference to Figures 1 and 2). The output layer further comprises intermediate switching cells 130a-d, of which 130a-b belong to sub-unit 122, and 130c-d belong to sub-unit 126.

The switch architecture 100 is a 4x4 switching network architecture (i.e., with four input cells and four output cells) and it is formed by four 2x2 switching network architectures which are grouped such that the switching cells of the switch architecture 100 are arranged in a rectangular matrix.

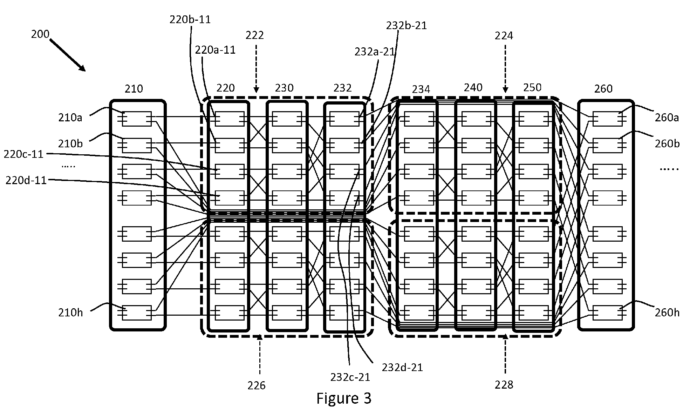

With reference to Figure 3, an embodiment of a switch architecture 200 is illustrated. Switch architecture 200 is arranged in a Double layer architecture, which will be described herein. The switch architecture 200 comprises an input column array 210 of eight input switching cells 210a-h, an output column array 260 of eight output switching cells 260a-h, and a plurality of further switching cells arranged in a plurality of columns. The switch architecture further comprises a number of interconnecting channels directly connecting pairs of the plurality of further switching cells, similar to the interconnecting channels of switch architecture 100, illustrated in Figures 1 and 2. The plurality of columns are all positioned between the input column array 210 and the output column array 260. More specifically, the plurality of columns include an input adjacent column 220, which is closest to the input column array 210 (i.e., immediately adjacent to the input column array), an output adjacent column 250, which is closest to the output column array 260 (i.e., immediately adjacent to the output column array), and four intermediate columns 130, 132, 134 and 140, disposed between the input adjacent column 220 and the output adjacent column 250. Each column comprises a number of switching cells. Each switching cell can be in either a parallel or crossed state, similarly to what has been described in detail for switch architecture 100. The intermediate columns 230 to 140 respectively comprise a plurality of intermediate switching cells 130a-h to 140a-h, the input adjacent column comprises eight of (input adjacent) switching cells 220a-h and the output adjacent column comprises eight of (output adjacent) switching cells 250a-h. In this example, each column comprises eight switching cells.

Each of the input switching cells 210a-h is selectively coupled to one of the output switching cells 260a-h, via one or more of the interconnecting channels of the switch architecture 200. Each of the output switching cells 260a-h is selectively coupled to one of the input switching cells 210a-h, via one or more of the interconnecting channels of the switch architecture 200.

The switching cells arranged in the columns 220 to 250 are also arranged within four sub-units 222, 224, 226 and 228. In this case, each sub-unit comprises a 4x4 switching network. Each 4x4 switching network comprises four input switching cells and four output switching cells. Each of the input/output switching cells comprises two input ports and two output ports. Thus, in this case, the sub-units have eight input ports and eight output ports. However, similarly to the sub-units of switch architecture 100, not all the input/output ports of sub-units 222 to 228 are used, i.e., directly connected to any other port. For instance, sub-unit 222 only has four input ports (220a-11 to 220d-11) and four output ports (232a-21 to 232d-21) which are in use. More specifically, first input ports (220a-11 to 220d-11) of input switching cells 220a-d of column 220 and the first output ports (232a-21 to 232d-21) of output switching cells 232a-d are in use, whilst the second input ports (not labelled for simplicity of illustration) of input switching cells 220a-d of column 220 and the second output ports (not labelled for simplicity of illustration) of output switching cells 232a-d are not in use.

Some of the switching cells of this arrangement are 2x2 switching cells. For instance, switching cells 230a-h are 2x2 switching cells. This means that both inputs and both outputs are in use. In other words, these switching cells have no idle input/output port. On the other hand, switching cells 220a-h are examples of 1x2 switching cells (i.e., with an idle input ports and both output ports in use). Switching cells 232a-h are examples of 2x1 switching cells (i.e., with an idle output port and both input ports in use).

Each input switching cells of each sub-unit is selectively connectable to any of the four output switching cells of the sub-unit. For example, each of the first input ports 220a-11 to 220d-11 of the respective input switching cells 220a-d of sub-unit 222 is selectively connectable to any of the first output ports 232a-21 to 232d-21 of the respective output switching cells 232a-d, through one or more of the switching cells 230a-d and 232a-d of, respectively, intermediate columns 230 and 232. In this example, each switching network is a 4x4 Double layer architecture, but other network architectures may be possible. Similarly to what has been described for sub-units 122 to 128 of switch architecture 100, also the sub-units 222 to 228 can be in different sub-unit states. Each sub-unit state corresponds to a specific combination of the switching cells forming the sub-unit being in a parallel or crossed state. Each sub-unit state corresponds to specific input ports of input switching cells being coupled to a specific corresponding output port of output switching cells of the sub-unit.

In this example, each of input switching cells 210a-d has a first output port 210a-21 to 210d-11 of the respective input switching cells 210a-d directly connected to a respective first input port 220a-11 to 220d-11 of a respective switching cell 220a-d of the input adjacent column 220. Each of the same input switching cells 210a-d also has a second output port (not labelled for simplicity of illustration) directly connected to a respective input port (also not labelled for simplicity) of an intermediate switching cell of intermediate column 234, through respective connecting channels, which extend between sub-units 222 and 226, without overlapping with nor intersecting any of the switching cells of the sub-units 222 and 226. The respective connecting channels run parallel to each other along the sides of sub-units 222 and 226, without overlapping with each other. The connecting channels further extend towards the respective intermediate switching cells they are connected to. The configuration described above is mirrored for input switching cells 210e-h. Each of input switching cells 210e-h has a first output port which is directly connected to a respective intermediate switching cell 234e-h of intermediate column 234, through respective connecting channels which do not intersect nor overlap with each other nor with any of the sub-units. As the connecting channels described above, these respective connecting channels run parallel to each other between the sides of sub-units 222 and 226. Each of input switching cells 210e-h has a second output port which is directly connected to a switching cell 220e -h of input adjacent column 220. A similar arrangement is illustrated for the output switching cells 160a-h. In this case, there are some points in which there is an overlap between connecting channels that connect intermediate switching cells 232a-h of intermediate column 232 with output switching cells 160a-h and connecting channels that directly connect switching cells 250a-h of the output adjacent column 250 with output switching cells 260a-h.

The sub-units 222 and 226 are part of a first group, which is arranged in a column adjacent to the input column array. The sub-units 224 and 228 are part of a second group, which is arranged in a column adjacent to the output column array 228.

Each input switching cell 210a-h is selectively connectable to any output switching cell 260a-h and any output switching cell 260a-h is selectively connectable to any input switching cell 210a-h through one or more intermediate switching cells, distributed in the switching networks within the sub-units 222 to 228.

The switching cells of the switch architecture 200 further include an input layer of switching cells. The input layer comprises all the switching cells which are directly connected to any of the input switching cells 210a-h. The input layer comprises all the input switching cells of all the sub-units of the switch architecture 200. In this particular case, the input layer comprises all the eight switching cells 220a-h of the input adjacent column 220, of which 220a-d belong to sub-unit 222 and 220e-h belong to sub-unit 226. The input layer further comprises intermediate switching cells 234a-h of intermediate column 234, of which 234a-d are input switching cells of sub-unit 224, and 234e-h are input switching cells of sub-unit 228.

The switching cells of the switch architecture 200 further include an output layer of switching cells. The output layer comprises all the switching cells which are directly connected to any of the output switching cells 260a-h. The output layer comprises all the output switching cells of all the sub-units forming the switch architecture 200. In this particular case, the output layer comprises all the eight switching cells 250a-h of the output adjacent column 250, of which 250a-d are output switching cells of sub-unit 224 and 250e-h are output switching cells of sub-unit 228. The output layer further comprises intermediate switching cells 232a-h of intermediate column 232, of which 232a-d are output switching cells of sub-unit 222, and 232e-h are output switching cells of sub-unit 226.

The switch architecture 200 is non-blocking, such that any of the plurality of input switching cells 220a-h is selectively connectable to any output switching cell 260a-h, with the smallest possible number of switching cells and interconnecting channels. Consequently, the number of unused interconnecting channels and switching cells is minimised. In this context, "unused" means not used to connect an input switching cell to a corresponding output switching cell, at a certain point in time.

Furthermore, the switch architecture 200 is bidirectional, because each signal can be propagated in opposite directions through the respective path, as illustrated for switch architecture 100, and more specifically for paths 1 and 3 of Figure 2.

The switch architectures described herein can be building blocks used to create bigger switch architectures, with a higher radix (i.e., a higher number of input/output switching cells). For example, the switch architecture 100 of Figure 1 can be a building block for sub-units of a switch architecture similar to switch architecture 200 (for instance, each of the sub-units 222 to 228 could be formed by a switch architecture 100. The switch architecture can therefore be formed by a nested structure of switching networks, that are iteratively repeated to form a higher radix architecture in a scalable way.

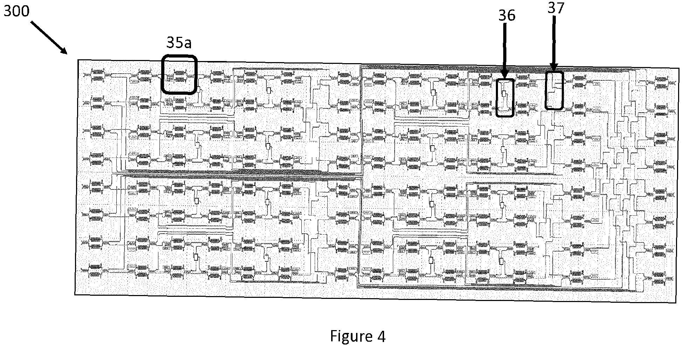

Figure 4 illustrates an example of switch architecture 300, arranged as a Dilated Banyan switch architecture. The switch architecture 300 is an optical switch architecture. The switching cells comprise optical switches, and the connecting channels between different optical switches are waveguides. The arrangement of the various switching cells and their relative connections has a structure which is partly similar (but not entirely identical) to the structure of switch architecture 200, shown in Figure 3. Advantageously, the optical switch architecture 300 can be used within an all-optical networking system, i.e., to provide an optical link between a plurality of servers or nodes. For example, the optical switch architecture 300 can be used for intra-datacentre connections, i.e., to selectively route a plurality of optical signals between different elements within a datacentre, such as servers, racks, GPUs or other nodes of the datacentre. This can be achieved by controlling the plurality of optical switching cells to route optical signals from any of the input switching cells to any of the output switching cells. Each of the input switching cells and output switching cells may be (directly or indirectly) coupled to optical fibres or other types of connectors, which are connected to different servers or other nodes of the datacentre. An optical signal may therefore be routed through the respective processing channel, to be sent from a first server within a datacentre to either a first recipient server, a second recipient server within said datacentre or another networking element.

With reference to both Figure 5, the optical switches used in the switch architecture may be any suitable optical switch in the art and in particular one of the examples 35a-d illustrated in Figure 5. Examples of optical switches may be 2x2 Mach-Zehnder interferometers (MZIs) 35a, 1x2 MZIs 35b, nested 2x2 MZIs 35c or dual-parallel 2x2 MZIs 35d. The switch architecture illustrated in Figure 4 includes, as optical switches, the 2x2 MZIs 35a of Figure 5. The 2x2 MZI comprises a splitter 351a having two inputs and two outputs, two phase shifters 352'a and 352''a and a combiner 354a having two inputs and two outputs. Each of the splitter's outputs is connected to the respective phase shifter input and each of the phase shifter's outputs is connected to the respective input of the combiner 354a. When the switching cells used in a particular switching architecture are 1x2 or 2x1 cells (as in the Dilated Banyan architectures previously described, in relation to switch architecture 100), the same MZIs of Figure 5 may be used, with an idle input or output port.

Alternative optical switches illustrated in Figure 5 may be also used, in other embodiments. A 1x2 MZI 35b is similar to the 2x2 MZI 35a, but the splitter 351b only has one input instead of two. A nested MZI 35c is a 2x2 MZI 35a in which one of the inputs of the splitter 351a and one of the outputs of the combiner 354a are, respectively, coupled to an output and an input port of two other combiners 351c and 354c. A dual-parallel 2x2 MZI 35d is formed by two 2x2 MZIs 35a which receive, in parallel, optical signals from an "input" combiner 351d, and send, in parallel, said optical signals to an "output" combiner 354d. Several combinations of optical switches are possible, within the switching networks within the different sub-units and, more generally, within the switch architecture 300. The state of the optical switches may be controlled and changed through standard techniques of programmable photonics.

Referring back to Figure 4, the waveguides connecting pairs of optical switches may be silicon waveguides. Advantageously, silicon waveguides are characterised by a high integration density and can provide a more compact chip design. In some points, two different waveguides might overlap, as in the cross-points 36 and 37.Cross-points (or crossings) are points in which two waveguides intersect at a 90 degree angle. The crossings are designed to minimise losses and crosstalk between the two waveguides. This is typically achieved by designing a particular width and shape of the crossing.

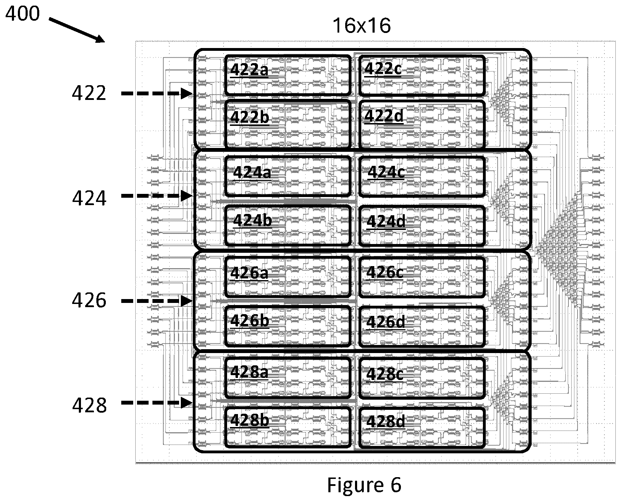

Figure 6 illustrates an optical switch architecture 400. The switch architecture 400 has an input column array and an output column array with, respectively, sixteen input switching cells (input optical switches) and sixteen output switching cells (output optical switches). The switch architecture 400 further comprises a plurality of columns disposed between the input column array and the output column array. In this embodiment, some of the switching cells of the plurality of columns are not aligned with the input and output switching cells (i.e., by considering the switching cells as part of a matrix, some switching cells are not in the same row as any of the input/output switching cells). The plurality of columns are arranged in switching networks that are disposed in sub-units characterised by a nested structure. In this example, the switch architecture comprises four sub-units 422, 424, 426 and 428. Each sub-unit comprises an 8x8 switching network, comprising eight input switching cells and eight output switching cells. The sub-units 422 to 428 are arranged in one column, between the input column array and the output column array. Each sub-unit is further divided into sub-sub-units. More specifically, each sub-unit 422 to 428 comprises four sub-sub-units. For example, sub-unit 422 comprises four sub-sub-units 422a-d. Each sub-sub-unit comprises a 4x4 switching network, comprising four input switching cells and four output switching cells. The four sub-units of each sub-unit are arranged in two groups: a first group, which comprises a column of two sub-sub-units which are closest to the input adjacent column, and a second group, which comprises a column of two-sub-sub-units which are closest to the output adjacent column.

The relative connections between switching cells of switch architecture 400 is similar to what has been described for switching architectures 100 to 300.

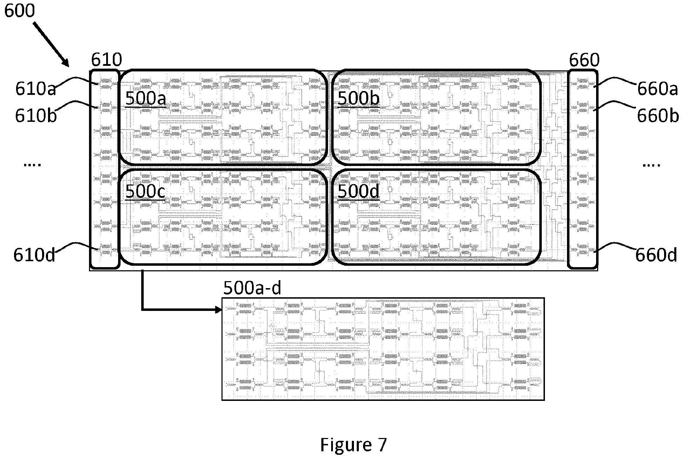

In Figure 7, an optical switch architecture 600 is illustrated. The switching architecture 600 comprises four switch architectures 500a-d, each having four input and four output switching cells. An illustration at the bottom of Figure 7 shows the layout of each of the four switch architectures 500a-d. The nested switch architectures 500a-d are connected to an input array column 610 of eight input switching cells 610a-h. The nested switch architectures 500a-d are further connected to an output array column 660 of eight input switching cells 660a-h.

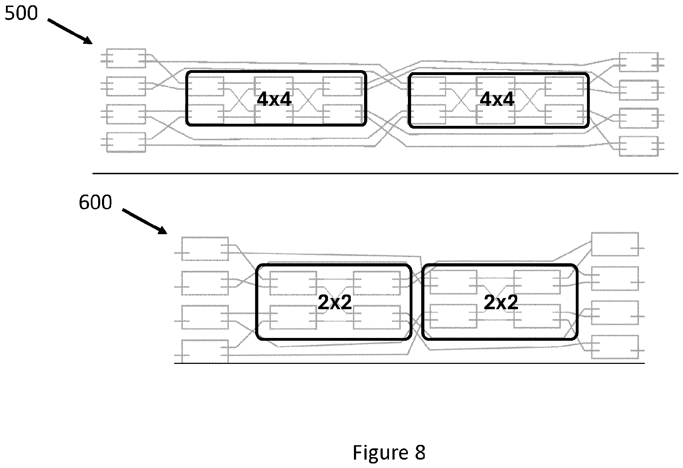

In Figure 8, two switching networks with alternative architectures than a Dilated Banyan are illustrated. More specifically, switch architecture 500 is a 4x4 Benes switching architecture, comprising an input column array of four switching cells, and an output column array of four switching cells. Furthermore, six columns of two switching cells each are arranged between the input and output column arrays. The switching cells of the six columns are divided into two sub-units, each sub-unit comprising a 2x2 Benes switching network. Switch architecture 600 is a Dilated Benes switching architecture. Each sub-unit is a Dilated Benes switching network.

Switch architectures can be created with different numbers of input and output switching cells, and with more and more switching networks, arranged in nested sub-units. Although it has been illustrated that the switching networks illustrated in Figures 1 to 4 and 6 to 8 have specific architectures (e.g., the switch architecture 100 is a Dilated Banyan), alternative architectures for similar switch networks can be contemplated.

## Claims

1. A switch architecture comprising:
an input column array comprising a plurality of input switching cells;
an output column array comprising a plurality of output switching cells;
a plurality of further switching cells and a plurality of interconnecting channels directly connecting pairs of the plurality of further switching cells; wherein
the plurality of further switching cells are arranged in a plurality of columns, the plurality of columns being positioned between the input column array and the output column array and including an input adjacent column which is closest to the input column array, an output adjacent column which is closest to the output column array, and a plurality of intermediate columns, with the intermediate columns being positioned between the input adjacent column and the output adjacent column;
a first input switching cell is directly connected to a first switching cell of the input adjacent column, and a second input switching cell is directly connected to a first intermediate switching cell of one of the intermediate columns;
a first output switching cell is directly connected to a second switching cell of the output adjacent column, and a second output switching cell is directly connected to a second intermediate switching cell of one of the intermediate columns.

2. The switch architecture of claim 1, wherein each of the first input switching cell and the second input switching cell is arranged to be selectively coupled to any of the output switching cells via one or more of the interconnecting channels; and
each of the first output switching cell and the second output switching cell is arranged to be selectively coupled to any of the input switching cells via one or more of the interconnecting channels.

3. The switch architecture of claim 1, wherein each input switching cell has a first output port directly connected to a switching cell of the input adjacent column, and a second output port directly connected to a respective intermediate switching cell of one of the intermediate columns.

4. The switch architecture of any preceding claim, wherein each output switching cell has a first input port directly connected to a switching cell of the output adjacent column, and a second input port directly connected to a respective intermediate switching cell of one of the intermediate columns.

5. The switch architecture of any preceding claim , wherein the further switching cells include an input layer of switching cells, wherein the input layer comprises all the switching cells which are directly connected to any of the input switching cells;
and the further switching cells further include an output layer comprising all the switching cells which are directly connected to any of the output switching cells;
wherein the input layer includes switching cells from at least two of the intermediate columns; and
wherein the output layer includes switching cells from at least two of the intermediate columns.

6. The switch architecture of any preceding claim, wherein the plurality of further switching cells are arranged in a plurality of sub-units, wherein each sub-unit comprises a NxN switching network, with each NxN switching network being a network of switching cells and comprising N input ports and N output ports, with each input port of each sub-unit being selectively connectable to any output port of the sub-unit through the network of switching cells.

7. The switch architecture of claim 6 when dependent on claim 3, wherein the second output port is directly connected to the respective intermediate switching cell through a first connecting channel, wherein the first connecting channel is one of the interconnecting channels; and
wherein the first connecting channel does not intersect any of the plurality of sub-units.

8. The switch architecture of claim 6, or claim 7, when dependent on claim 4, wherein the second input port is directly connected to the respective intermediate switching cell through a second connecting channel, wherein the second connecting channel is one of the interconnecting channels; and
wherein the second connecting channel does not intersect any of the plurality of sub-units.

9. The switch architecture of any of claims 6 to 8, wherein:
(i) when dependent on claim 2, the switching cell of the input adjacent column and the switching cell of the respective intermediate column belong to two different sub-units;
(ii) when dependent on claim 3, the switching cell of the output adjacent column and the switching cell of the respective intermediate column belong to two different sub-units.

10. The switch architecture of any of claims 6 to 9, wherein the plurality of sub-units is divided into a first group of sub-units and a second group of sub-units, wherein the first group is arranged in a column adjacent to the input column array and the second group is arranged in a column adjacent to the output column array.

11. The switch architecture of claim 10, when dependent on claim 9-(i) wherein the input switching cell of the input adjacent column belongs to a first sub-unit of the first group, and the respective intermediate switching cell of the intermediate column belongs to a second sub-unit of the second group; and wherein the first connecting channel extends around the first sub-unit without intersecting the first sub-unit.

12. The switch architecture of claim 10, when dependent on claim 9-(ii), wherein the output switching cell of the output adjacent column belongs to a third sub-unit of the second group, and the respective intermediate switching cell of the intermediate column belongs to a fourth sub-unit of the first group; and wherein the second connecting channel extends around the fourth sub-unit without intersecting the fourth sub-unit.

13. The switch architecture of any of claims any preceding claim, wherein each input switching cell is selectively connectable to any output switching cell and any output switching cell is selectively connectable to any input switching cell through one or more of the intermediate switching cells.

14. The switch architecture of any preceding claim, wherein the switch architecture is non-blocking, such that any of the plurality of input switching cells is selectively connectable to any output switching cell with the smallest possible number of switching cells and interconnecting channels.

15. The switch architecture of any preceding claim, wherein the switch architecture is bidirectional.

16. The switch architecture of any preceding claim, wherein each of the plurality of sub-units comprises one of a Dilated Banyan switching network, a Switch and Select switching network, a Benes switching network or a Dilated Benes switching network.

17. The switch architecture of any preceding claim, wherein the switch architecture is an optical switch architecture, such that each of the switching cells comprises an optical switch and each connecting channel between switching cells comprises a waveguide.
